# EUROPEAN PATENT APPLICATION

(11) **EP 3 965 327 A1**
(43) Date of publication of application: **09.03.2022**
(21) Application number: 21184462.6
(22) Date of filing: 28.10.2016
(51) Int. Cl.: H04L 1/00, H04L 5/00, H04L 27/26

(54) **SWITCHING FROM ONE OFDM MODE HAVING A CERTAIN NUMEROLOGY TO ANOTHER**

(62) Divisional of application: 16790940.7
(71) Applicant: HUAWEI TECHNOLOGIES CO., LTD., Shenzhen, Guangdong 518129, P.R. (CN)
(72) Inventor: GONG, Xitao, 80992 Munich (DE); ZHAO, Zhao, 80992 Munich (DE); LONG, Yi, 80992 Munich (DE); GUO, Zhiheng, 80992 Munich (DE); SCHELLMANN, Malte, 80992 Munich (DE)
(74) Representative: Gill Jennings & Every LLP

(57) **Abstract**

A communication terminal for communicating with a base device by frequency and/or time division multiplexing, the terminal being configured to transmit and/or receive signals to and/or from the base device using any of a plurality of numerology types, the communication terminal being configured to: communicate with the base device using a default one of the numerology types and thereby receive a configuration word from the base device; determine in dependence on the default one of the numerology types and the configuration word a secondary numerology type; and subsequently communicate with the base device using the secondary numerology type when the second numerology type is activated.

## Description

This invention relates to switching the numerology that is in use for communications between devices in a communication system.

In an OFDM (orthogonal frequency division multiplexing) communications link, for example, the numerology of the link is the set of parameters that define the OFDM structure. Examples of parameters that may be encompassed by the numerology are subcarrier spacing, cyclic prefix size, constellation size, modulation scheme and FFT size. In a simple system these parameters might be held constant for all devices operating in the system. In other systems, the parameters might be varied to provide greater resistance to interference or greater data rates for specific devices, or to reduce the amount of spectral bandwidth used by one device so as to make room for another device to communicate. In other systems numerologies define similar parameters.

In current LTE/LTE-A systems, there are mainly three OFDM numerology types in use: 15 kHz with normal cyclic prefix (CP), 15 kHz with extended CP, and 7.5 kHz with extended CP. The latter two types with extended CP are mainly specified for MBMS, and the case with 7.5 kHz is rarely used. Given such a limited number of numerologies, the numerology configuration in LTE/LTE-A is mainly performed in two ways:
- For initial access, the cell search procedure starts with broadcasting two synchronization signals: the Primary Synchronization Signal (PSS) and the Secondary Synchronization Signal (SSS). A UE blindly detects the CP length by checking for the SSS.
- For Multimedia Broadcast Single Frequency Network (MBSFN) subframes where extended CP is used, a system information bock (SIB) sent to the UEs informs them of the locations of specific MBSFN frames that will use the extended CP numerology.

Flexible choice of numerology is expected to be a feature of future mobile systems such as 3GPP 5G New Radio (NR). These systems are expected to support a large operational frequency spectrum, ranging from sub GHz (e.g. 700MHz) to millimetre wave bands (e.g. 100 GHz). A large set of OFDM waveform numerologies might be available. It is conceivable that more than one numerology might be available in a single carrier band. The possible OFDM waveform numerologies could include the following:

| **OFDM subcarrier spacing** | **OFDM CP length** |
|---|---|
| 3.75KHz | Normal, Extended |
| 7.5 KHz | Normal, Extended |
| 15 KHz | Normal, Extended |
| 30 KHz | Normal, Extended |
| 60 KHz | Normal, Extended |
| 120 KHz | Normal, Extended |
| 240 KHz | Normal, Extended |

If the numerology configuration schemes of LTE/LTE-A were to be applied to configuring the use of a large number of numerologies in 5G NR, some problems might arise:
- Firstly, having UEs perform blind detection of numerology from among a large number of possible types could incur excessive complexity in the initial access procedure.
- Secondly, if specific subframes with different numerologies were to be configured using the system information block (SIB), the locations of those subframes would be static, or semi-static. This constrains the flexibility with which the radio resources can be used.

Furthermore, it would be advantageous to be able to configure different numerologies on the same frequency band in a time division multiplexing manner, for example by placing control and signalling context in the resources also configured with a specific numerology. The LTE/LTE-A system does not accommodate this.

There is a need for an improved scheme to allocate numerologies.

According to one aspect there is provided a communication terminal for communicating with a base device by frequency and/or time division multiplexing, the terminal being configured to transmit and/or receive signals to and/or from the base device using any of a plurality of numerology types, the communication terminal being configured to: communicate with the base device using a default one of the numerology types and thereby receive a configuration word from the base device; determine in dependence on the default one of the numerology types and the configuration word a secondary numerology type; and subsequently communicate with the base device using the secondary numerology type when the second numerology is activated.

The terminal may be configured to determine in dependence on the default one of the numerology types and the configuration word a location at which the secondary numerology is to be active. This may permit it to activate the second numerology at a designated time.

The communication terminal may store information indicative of a time at which to activate the second numerology, or be configured to receive information indicative of a time at which to activate the second numerology. In that way it can determine when to activate the second numerology.

The number of bits in the configuration word may be less than the number of bits in the binary representation of the number of the plurality of numerology types.

The terminal may be configured to: determine a region of the frequency spectrum in which to operate; and in dependence on that determination select the default one of the numerology types.

The terminal may store, for each of at least some of the numerology types, a mapping defining which of the plurality of numerology types are indicated by specific values of the configuration word. The terminal may be configured to perform the step of determining a secondary numerology type by selecting as the secondary numerology type the numerology type indicated for the received configuration word by the mapping corresponding to the default numerology type.

The terminal may be configured to perform the step of determining a secondary numerology type by: determining in dependence on the received communication word a deviation from the default numerology type; and selecting as the secondary numerology type the one of the plurality of numerology types that deviates from the default numerology type by the determined deviation.

The communication terminal may be configured to receive from the base device an indication of a time and/or frequency space resource (e.g. a numerology location) associated with the configuration word; and in dependence on that indication use the secondary numerology type for transmission and/or reception of signals in that resource. The indication of a resource may be an indication of a set of subcarriers and symbols defining that resource.

According to a second aspect there is provided a communication terminal as claimed in any preceding claim, wherein the communication terminal is configured to: store a definition of one or more identifiers pertaining to the terminal; receive a resource identifier associated with the configuration word; and determine whether the received resource identifier matches the definition of one or more identifiers; and wherein the terminal is configured such that the step of communicating with the base device using the secondary numerology type is conditional on the received resource identifier matching the definition of one or more identifiers.

The resource identifier may be indicative of a single terminal associated with the base device.

The resource identifier may be indicative of multiple terminals associated with the base device.

The resource identifier may be an identifier allocated to the terminal by the base device.

The resource identifier may be a Radio Network Temporary Identifier.

According to a third aspect there is provided a communication terminal for communicating with a base device by frequency and/or time division multiplexing, the terminal being configured to transmit and/or receive signals to and/or from the base device using any of a plurality of numerology types, the communication terminal being configured to: store a definition of one or more identifiers pertaining to the terminal; communicate with the base device using a default one of the numerology types and thereby receive from the base device (i) a configuration word and (ii) an indication of a time and/or frequency space resource (e.g. a numerology location) associated with the configuration word; determine in dependence on the configuration word a secondary numerology type; and subsequently communicate with the base device using the secondary numerology type in the resource indicated by the said indication.

The indication of a resource may comprise an indication of a set of subcarriers and a length of a group of symbols defining that resource.

The group of symbols may be a contiguous group of symbols.

The indication of a resource may indicate a time when the group of symbols will occur.

The indication of a resource may indicate a repetition schedule for the group of symbols.

According to a fourth aspect there is provided a communication terminal for communicating with a base device by frequency and/or time division multiplexing, the terminal being configured to transmit and/or receive signals to and/or from the base device using any of a plurality of numerology types, the communication terminal being configured to: store a definition of one or more identifiers pertaining to the terminal; communicate with the base device using a default one of the numerology types and thereby receive from the base device (i) a configuration word and (ii) a resource identifier associated with the configuration word; determine in dependence on the configuration word a secondary numerology type; determine whether the received resource identifier matches the definition of one or more identifiers; and if the received resource identifier matches the definition of one or more identifiers, communicate with the base device using the secondary numerology type.

The resource identifier may be indicative of a single terminal associated with the base device.

The resource identifier may be indicative of multiple terminals associated with the base device.

The resource identifier may be an identifier allocated to the terminal by the base device.

The resource identifier may be a Radio Network Temporary Identifier.

The communication terminal may be configured to recover control channel information transmitted by the base device by means of one or both of the primary and secondary numerology types.

The communication terminal may be configured to, on connecting to a communication system, receive signalling identifying the said plurality of numerology types and store an indication of those numerology types.

According to a fifth aspect there is provided a communication base device for communicating with a terminal by frequency and/or time division multiplexing, the base device being configured to transmit and/or receive signals to and/or from the terminal using any of a plurality of numerology types, the base device being configured to: communicate with the terminal using a default one of the numerology types and thereby transmit a configuration word to the terminal, the configuration word indicating a secondary numerology type; and subsequently communicate with the terminal using the secondary numerology type when the secondary numerology is activated.

The base device may be configured to transmit a or the configuration word to the terminal indicating a location at which the secondary numerology is to be active. This may permit the terminal to determine when to activate the secondary numerology.

The base device may be configured to send or to receive information indicative of a time at which to activate the second numerology. This may permit the terminal to determine when to activate the secondary numerology.

The base device may be configured to operate in a region of the frequency spectrum; and to select in dependence on that region the default one of the numerology types.

The base device may store, for each of at least some of the numerology types, a mapping defining which of the plurality of numerology types are indicated by specific values of the configuration word, and the base device may be configured to generate the configuration word for transmission by selecting a secondary numerology type and determining the configuration word indicated for the selected numerology type by the mapping corresponding to the default numerology type.

The base device may be configured to generate the configuration word for transmission by: selecting a secondary numerology type; determining a deviation of the secondary numerology type from the default numerology type; and determining the configuration word so as to represent the deviation of the selected secondary numerology type from the default numerology type.

The base device may be configured to transmit to the terminal an indication of a time and/or frequency space resource (e.g. a numerology location) associated with the configuration word.

The communication base device may be configured to: store a definition of one or more identifiers pertaining to terminals associated with it; and transmit in association with the configuration word a resource identifier matching the said terminal.

The resource identifier may be indicative of a single terminal associated with the base device. The resource identifier may be indicative of multiple terminals associated with the base device. The base device may be configured to allocate the resource identifier to the terminal. The resource identifier may be a Radio Network Temporary Identifier.

According to a sixth aspect there is provided a communication base device for communicating with a terminal by frequency and/or time division multiplexing, the base device being configured to transmit and/or receive signals to and/or from the terminal using any of a plurality of numerology types, the base device being configured to: communicate with the terminal using a default one of the numerology types and thereby transmit to the terminal (i) a configuration word indicating a secondary numerology type and (ii) an indication of a time and/or frequency space resource (e.g. a numerology location) associated with the configuration word; and subsequently communicate with the terminal using the secondary numerology type in the resource indicated by the said indication.

The indication of a resource may comprise an indication of a set of subcarriers and a length of a group of symbols defining that resource. The group of symbols may be a contiguous group of symbols. The indication of a resource may indicate a time when the group of symbols will occur. The indication of a resource may indicate a repetition schedule for the group of symbols.

The base device may be configured to: at a first time transmit to the terminal the configuration word indicating the secondary numerology type; and at a second time subsequent to the first time, transmit to the terminal the indication of a time and/or frequency space resource (e.g. a numerology location) associated with the configuration word. This may enable the terminal device to adopt a semi-persistent configuration of the secondary numerology.

According to a seventh aspect there is provided a communication base device for communicating with a terminal by frequency and/or time division multiplexing, the base device being configured to transmit and/or receive signals to and/or from the terminal using any of a plurality of numerology types, the base device being configured to: allocate an identity to the terminal; communicate with the base device using a default one of the numerology types and thereby transmit to the terminal (i) a configuration word indicating a secondary numerology type and (ii) a resource identifier associated with the configuration word, the resource identifier matching the identity allocated to the terminal; and subsequently communicate with the base device using the secondary numerology type.

The resource identifier may be indicative of a single terminal associated with the base device. The resource identifier may be indicative of multiple terminals associated with the base device. The base device may be configured to allocate the resource identifier to the terminal. The resource identifier may be a Radio Network Temporary Identifier.

The secondary numerology type may differ from the default numerology in subcarrier spacing and/or cyclic prefix length.

The communication base device may be configured to transmit control channel information to the terminal by means of the one or both of the primary and secondary numerology types.

The base device may be configured to, on a terminal connecting to it, transmit signalling identifying the said plurality of numerology types.

According to an eighth aspect there is provided a communication system comprising a terminal as set out above and a base device as set out above.

In each aspect the numerology type may be defined with reference to features that include any one or more of subcarrier spacing, cyclic prefix length and/or other features of the numerology as applied when it is being used. A numerology location may define the time(s) and/or frequency band(s) where the numerology is to be active.

The present invention will now be described by way of example with reference to the accompanying drawings. In the drawings:
Figure 1 shows schematically some components of a communication system.
Figure 2 illustrates a handover procedure.
Figure 3 illustrates a signalling procedure for dynamic operation.
Figure 4 shows options for locating the PDCCH containing the DCI for secondary numerology configuration.
Figure 5 shows a signalling procedure for semi-persistent operation.
Figure 6 shows options for locating the PDCCH containing the DCI for secondary numerology configuration.
Figure 7 and 8 show schemas for identifying the resource block(s) and subframe(s) where a specific numerology is to be used.
Figure 9 shows options for locating the PDCCH containing the DCI for secondary numerology configuration.

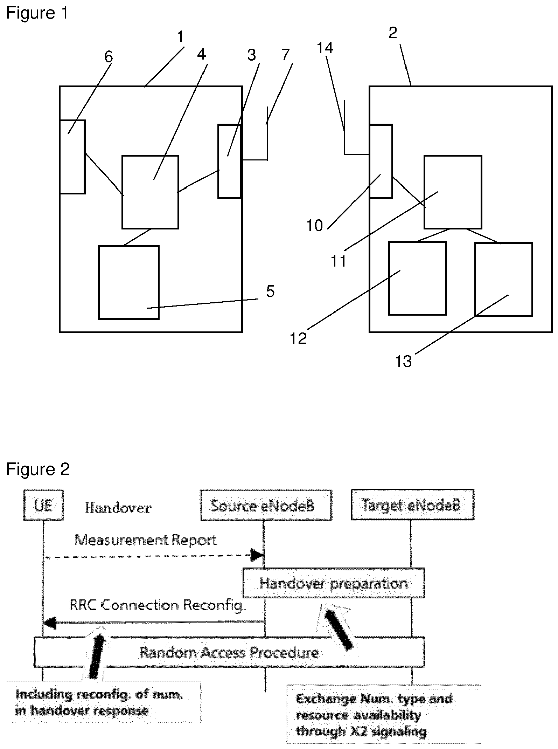

Figure 1 shows part of a wireless communication system comprising a base device 1, such as a base station, and a terminal 2 such as a mobile phone or other endpoint. The base device comprises a wireless transceiver 3, a processor 4, a memory 5 and a communication interface 6 to a further network. The transceiver is coupled to an antenna 7. The transceiver operates as a radio front end to transmit and receive signals via the antenna. The processor 4 executes code stored in a non-transient way in memory 5. The code is such that the processor is configured to perform the functions described of it below. The processor can communicate with the further network via the interface 6. The network may be the remainder of a communication network of which the components in figure 1 form part, for example a cellular network. The terminal comprises a transceiver 10, a processor 11, a memory 12 and a user interface 13. The transceiver 10 is coupled to an antenna 14. The transceiver operates as a radio front end to transmit and receive signals via the antenna. The processor 11 executes code stored in a non-transient way in memory 12. The code is such that the processor 11 is configured to perform the functions described of it below.

In the description below the base device or base station and the terminal or user equipment (UE) are described as performing various functions. These can be performed by the processors 4, 11 operating in accordance with the code stored in memories 5, 12 to process data, cause their respective transceivers 3, 10 to transmit data, configure their respective transceivers to receive data, process the received data, store state and perform other functions.

In the description below terminology typically used with reference to LTE networks will be used. However, it will be appreciated that the principles are not limited to LTE and can be applied to other networks.

The description below relates to features of telecommunication systems that can permit them to operate with multiple numerologies. In the description, the following terms will be used:
- "Primary numerology": refers to a default or initial numerology. Devices such as base device 1 and terminal 2 may be configured at start-up or by other mechanisms to use this numerology when firs communicating (at least for traffic data) with another device. The devices may be configured to use different primary numerologies for different frequency carriers/bands and/or in different networks. Providing for this numerology can facilitate UEs to perform initial access processes, acquire basic control channels and perform initial data transmission and/or reception.
- "Secondary numerology": refers to a numerology used by a device for communicating with another device after the primary numerology has been used, preferably after the primary numerology has been used in the same communication session. There may be different secondary numerologies used and/or available for different frequency carriers/bands. Features of the secondary numerology such as its subcarrier spacing or its cyclic prefix length may be, or may not be, multiples or submultiples of the corresponding feature of the primary numerology for the same carrier.
- "Resource block" (RB): refers to a block of communication resource defined by a specific number of subcarriers (A) and symbols (B) (e.g. A=12, B=7, as in LTE with normal CP). Different RBs may be defined for different numerologies.

To facilitate initial communications between a UE and a base device it is preferable for a primary numerology to be defined. Then the UE knows how to try and detect communications from the base device. If no primary numerology is defined the UE could perform blind detection on received signals to detect a numerology initially in use by the base device. However, this may consume power and may take a considerable time. The primary numerology may be stored in memories 5, 12. There may be different primary numerologies stored, at least in memory 12 of the UE, for different carriers or frequency bands in which the UE may operate.

When the UE is in a communication session with the base device it can initially operate to receive and/or transmit data using the primary numerology type. Subsequently, the devices may switch to using a secondary numerology which is different from the primary numerology. Different primary and/or secondary numerologies may be used at the same time on the downlink and the uplink. In order for the base device to signal to the UE a specific secondary numerology that is to be used, the following context information can be defined in the signalling:
- SN-Indicator. This is an indicator to indicate corresponding downlink control information (DCI) for secondary numerology configuration. The SN-Indicator may, for example, have a length of one or two bits, using the techniques described below. The SN-Indicator may comprise or be in conjunction with an identifier of one or more UEs to which it applies. That identifier may operate as for the known Radio Network Temporary Identifier (RNTI).
- SN-TypeConfig: This is an indicator of a secondary numerology type to be used. It may be indicated in two ways: either directly with reference to a number allocated to the new numerology type; or relatively, by reference to the primary or current numerology type. In the former case, the indicator may have, e.g. 4 bits. In the latter case it may have fewer bits, e.g. 2 bits. To refer to a numerology in a relative sense the bits of the indicator may indicate, for example the multiple of the current/primary numerology's subcarrier spacing that the secondary numerology is to have (e.g. 0=twice and 1=half). Other features such as cyclic prefix length may be indicated in a similar way. Alternatively, the UE may store one or more lookup tables that indicate, for each primary/current numerology that may be in use, the offset from that numerology to a new secondary numerology that is indicated by the bits of the indicator: e.g. 00=half subcarrier spacing, shorter cyclic prefix length, 01=same subcarrier spacing, shorter cyclic prefix length and so on). There may be different look up tables for different carriers. Alternatively, the lookup table(s) may directly indicate the new secondary methodology.
- SN-RBIdxConfig and SN-SubframeIdxConfig: These indicate a resource location where the secondary numerology is to be used. The resource may be indicated by an RB index and a subframe index.

Further information may be signalled, for example HARQ process information, and TPC information. In order to signal a UE to adopt a particular secondary numerology the base device sends the appropriate context information to the UE. The processor of the UE interprets that information and then adopts the signalled numerology, either generally or only in the specified resource location(s).

When multiple numerologies are in use, initial access by a UE to a base device may be performed as follows.
- Regardless of which numerology the transmission will use, initial access signals (e.g. synchronization sequences PSS/SSS (primary/secondary synchronization sequences), PBCH, partially PDCCH) are sent using the primary numerology.
- At the UE, the CP length in use by the base device may be blindly detected using SSS sequences. The indication of the PBCH (physical broadcast channel) is sent using the primary numerology, together with other critical system information for access. If mixed-numerology is statically allocated (as will be discussed below), the secondary numerology type (SN-TypeConfig) and its location of resources (SN-RBIdxConfig and SN-SubframeIdxConfig) may be explicitly signalled, e.g. to all UEs, through the master information block (MIB) or the system information block (SIB).

In order for a system to perform handover of a UE from one base device to another when multiple numerologies are available the following may be observed. When the UE is using the primary numerology handover can be performed similarly to the normal method. When a secondary numerology is being used, the standard procedure may be modified as follows (see figure 2):
- In preparation for handover, the source and target base devices (e.g. eNodeBs) will exchange information regarding which secondary numerology types they support and which numerology type is in use by the UE. This information may be transmitted through X2 signalling. At this stage, the source eNB can make a decision to hand off the UE and can issue a handover request message to the target eNB passing the necessary information to prepare the handover at the target side. That may include a request to continue the use of secondary numerology on the same carrier or a different carrier, considering the availability of resources at the target eNB. If the eNB has no resource are available to support the secondary numerology in use by the UE, the target eNB can prepare the available resources with a different numerology type, and may switch the UE to that numerology type before the handover. Then the target eNB sends the handover request acknowledge to the source eNB, passing the agreed numerology type and resource location.
- The source eNB informs the UE with the RRC Connection Reconfiguration message with necessary parameters including system information of reconfiguration of numerology type and assigned resources.

A UE can be configured to adopt a secondary numerology in multiples ways. Some examples are as follows:
- Dynamic mode: On-demand configuration based on a dynamic scheduler.
- Semi-static mode: Semi-persistent configuration. The configuration may be based on RRC signalling.
- Static mode: The UE can be configured, either at initial access/handover or later, to adopt a secondary numerology and continue using it until instructed otherwise.

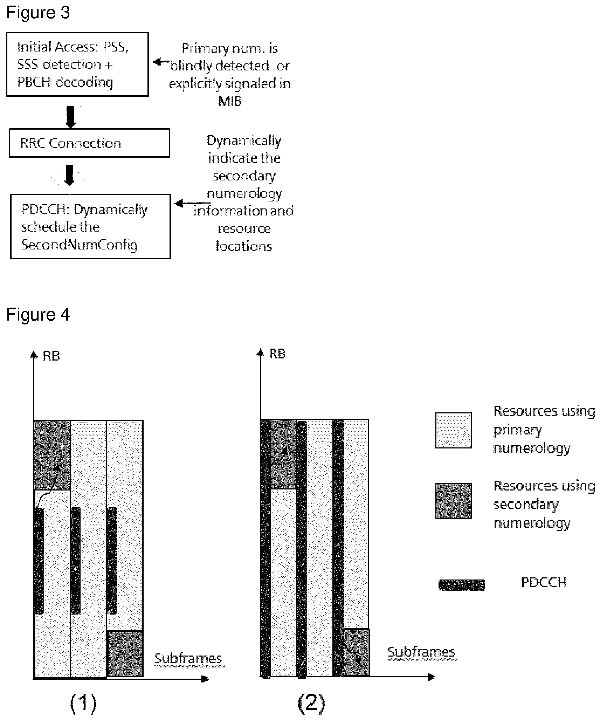

The dynamic mode may be advantageous in that it may permit the UE to use multiple numerologies flexibly to help meet diverse requirements of multiple services. As described above, the primary numerology is informed by default (e.g. standardization) or informed by system information (e.g. by MIB). Then in dynamic mode the secondary numerology/ies to be used is/are configured according to a dynamic schedule. In order to operate dynamically with a secondary numerology, the following steps can be taken.
- Enable dynamic configuration by the scheduler, e.g. using PDCCH signalling. The signalling procedure is depicted in figure 3.
- An SN-Indicator is sent from the base device to the UE to indicate downlink control information (DCI) for configuring the secondary numerology. To permit dynamic numerology usage to be signalled to the UE it is convenient to define a new DCI for secondary numerology configuration (SNConfig). The search space for such a DCI can be UE-specific. Two definition options can be provided for such a DCI.
   ▪ Option1: A new DCI format can be defined to schedule secondary numerology for PDSCH/PUSCH transmission. That format can include an SN-TypeConfig (an indication of a numerology type, which may be a few bits long); an SN-RBIdxConfig and a SN-SubframeIdxConfig (indicators of the RB and the subframe index defining the resource to which the new numerology is to be applied). Further control information may be provided, for example any of HARQ process information, transmit power control (TPC) information and precoding information.
   ▪ Option 2: The DCI for dynamic numerology usage may be similar to the current DCI format in LTE but with the addition of an indication of numerology type and resource assignment (i.e. SN-TypeConfig and SN-RBIdxConfig and SN-SubframeIdxConfig as discussed above).

As indicated in figure 4, two options are available for locating the PDCCH containing the DCI for secondary numerology configuration.
- Option1: As shown in figure 4(1), the PDCCH is only transmitted with the primary numerology. The PDCCH search space is pre-assigned by system information and is UE-specific. The DCI for the secondary numerology configuration is contained in the PDCCH. It schedules the secondary numerology resource usage.
- Option 2: As shown in figure 4(2), the PDCCH is transmitted with both the primary and the secondary numerology. The PDCCH transmitted with the primary or secondary numerology contains the DCI for data transmission with the primary or secondary numerology, respectively. In the case of the PDCCH containing secondary numerology control information, it is desirable for system information to notify the UE of the secondary numerology type and the PDCCH location beforehand to avoid excessive blind decoding attempts by the UE.

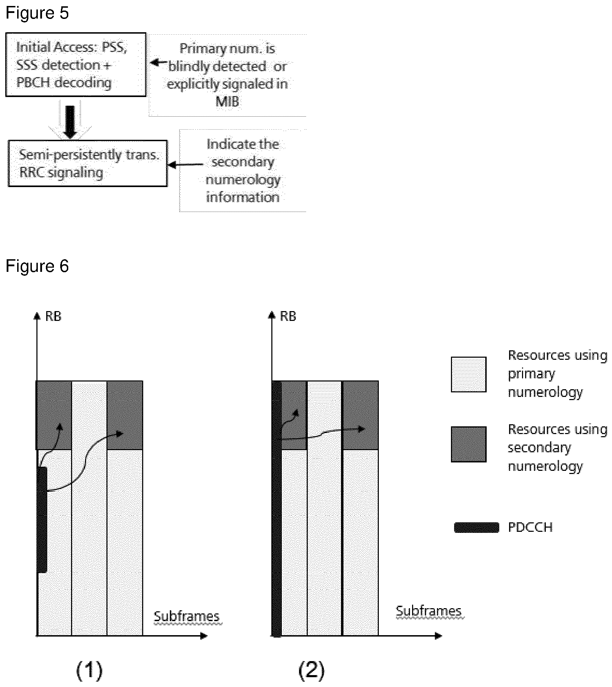

An alternative to dynamic allocation of secondary numerology is to use semi-static scheduling of secondary numerology. This may reduce the burden on downlink control channel capacity compared to dynamic allocation. With semi-static scheduling, UEs use secondary numerology following a periodic pattern. As discussed above, the primary numerology is informed by default (e.g. by standardization) or informed by system information (e.g. by MIB). In order to operate semi-statically with a secondary numerology the following steps can be taken:
- The secondary numerology to be used in accordance with semi-persistent operation can be configured by RRC signalling, for example as indicated in figure 5. The RRC signalling may contain control information indicating the secondary numerology type (by SN-TypeConfig message) and an SN-Indicator message. The SN-Indicator is used to help activate, reactivate or release a secondary numerology. Preferably, this RRC signalling does not directly activate the usage of secondary numerology. Its usage will be activated in the step 2) below.
- The procedure for semi-persistent configuration of secondary numerology for one or more UEs is as follows.
   1) UEs receive RRC signalling as described above and prepare to use secondary numerology.
   2) UEs activate the use of secondary numerology after decoding the control message on PDCCH using the SN-Indicator, and obtain the corresponding resource location, modulation and coding scheme (MCS), etc. In those resources where secondary numerology can be periodically applied, control information can be indicated in the PDCCH indicating whether in that resource secondary numerology will be applied or not.
   3) Optionally, UEs can be configured to automatically reactivate the use of secondary numerology after handover to a new base device.
   4) When the secondary numerology is to be released, the UEs do so after receiving the appropriate RRC signalling

There are two options for locating the PDCCH containing the corresponding DCI for secondary numerology configuration, as shown in figure 6. In contrast to the mechanism of figure 5, in figure 6 the usage of the secondary numerology follows a periodical pattern. The PDCCH is transmitted at the beginning of semi-persistent scheduling resources (e.g. not in each subframe).
- Option1: As shown in figure 6(1), the PDCCH is only transmitted with the primary numerology when resources are initially scheduled. The PDCCH is UE-specific. The DCI for configuration of the secondary numerology is contained in this PDCCH. It schedules the secondary numerology resources to be adopted.
- Option 2: As shown in figure 6(2), the PDCCH is transmitted with the primary and/or the secondary numerology and contains the relevant DCI for the numerology with which it is transmitted. In the case of a PDCCH containing secondary numerology control information, it is preferable for the UE to be informed in advance (e.g. by means of SIB) of the secondary numerology type and the location of the PDCCH in order to avoid excessive blind decoding attempts.

As an alternative to dynamic and semi-static configuration of secondary numerology, system-level numerology configuration can be applied statically. This can further reduce signalling overhead. In this approach any UEs that are associated with the base unit that are to use this configuration are informed by the base unit of the static configuration. This may be done at the initial access step, at handover to the base unit, or later if it is then determined that this configuration is to be used. As indicated above, the primary numerology type can be defined by default (e.g. by standardisation) or can be informed to a UE by the base device. The secondary numerology type is conveniently configured by information transmitted from the base device to the UE.

In some situations, a group of UEs that are associated with a base device may all be using or intended to use a common secondary numerology type. In that situation signalling overhead can be reduced by adopting the following approach.
- A parameter SN-G-RNTI is defined. This is an identifier which indicates the UEs of the group that are to apply the specific secondary numerology type, and provides the appropriate configuration of secondary numerology. This may be a Radio Network Temporary Identifier (RNTI) having an associated DCI indicating the secondary numerology configuration for the group of UEs. This RNTI is suitable for dynamic or semi-persistent configuration.
- UEs are informed by the base device of their identity so that they can know whether they are part of the SN-G-RNTI.
- The SN-G-RNTI is transmitted by the base device. UEs receiving the SN-G-RNTI establish whether they are part of the group of UEs identified in the SN-G-RNTI. The base device transmits the downlink control information (DCI) associated with the SN-G-RNTI in a broadcasting or multicasting manner so that the relevant UEs can receive it. The UEs that determined they were identified in the SN-G-RNTI process the DCI and action it to start using the specified secondary numerology. When the DCI is multicasted to specific UEs (e.g. of the group specified in the SN-G-RNTI) this can limit the space of the control information those UEs need to search to find the DCI.

In order to allow different numerologies to be used in different resource blocks and/or subframes, it is helpful to define a schema for identifying the resource block(s) and subframe(s) where a specific numerology is to be used.

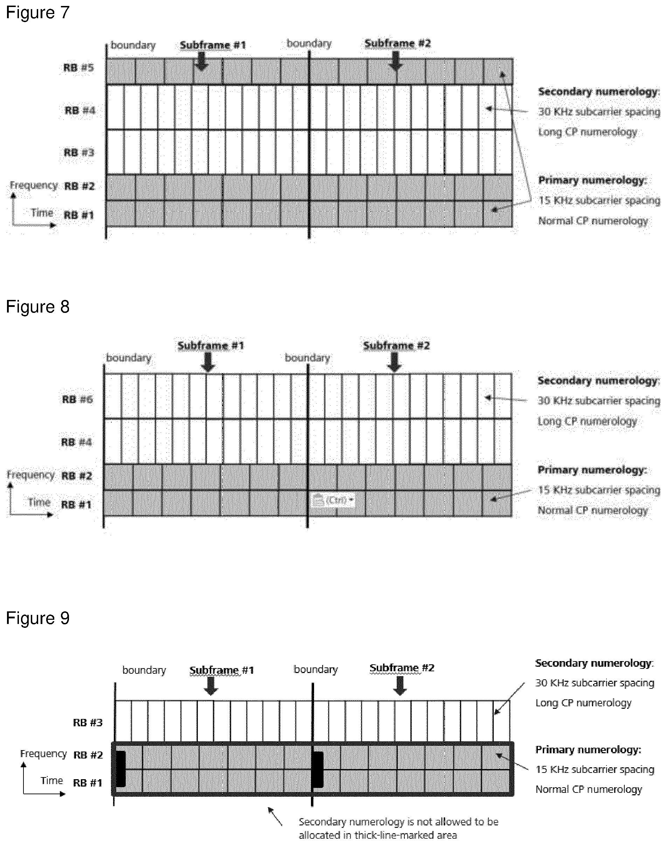

One option for such a schema is illustrated in figure 7. In the time domain, different numerologies are aligned at the subframe boundary by adjusting their CP length. This subframe alignment allows for a continuous numbering of subframes. In the frequency domain, continuous numbering of resource blocks (RBs) is applied: i.e. the RBs are counted in the order of their appearance irrespective of their underlying numerology. Guard tones are counted as resource blocks with zero utilization; the dimensioning of guard tones is controlled by the scheduler to avoid interference. In order to avoid numbering ambiguity for different numerologies, all UEs active in the system should know the current numerology settings. Therefore, this numbering scheme is suitable for static or semi-persistent mixed-numerology modes.

A second option for such a schema is illustrated in figure 8. In the time domain, the same numbering scheme is used as in the schema of figure 7. In the frequency domain, however, the RB numbering refers to the RB size defined by the primary numerology. Specifically, the numbering of the secondary numerology RB is equal to the numbering of the last RB plus the result of dividing the subcarrier spacing of the secondary numerology by the subcarrier spacing of the primary numerology. As a consequence, in this schema the RB numbering can be discontinuous if the secondary numerology's subcarrier spacing is a power of 2 of that in the primary numerology; and the RB numbering can be fractional if the secondary numerology subcarrier spacing is a negative power of 2 of that in primary numerology. As in the previous schema, guard tones are treated as resource blocks with zero utilization.

It is useful to regulate the allocation of secondary numerologies to facilitate the use of schemas such as those described above. In the time domain, secondary numerology resources can conveniently be allocated with the granularity of subframes. In the frequency domain, secondary numerology resources can conveniently be allocated with the granularity of RBs defined by the primary numerology. If the system control information (e.g. the common-search-space in LTE) occupies certain resources having the primary numerology, secondary numerology resources can be prohibited to be allocated in that subframe and RB. This is illustrated in figure 9, where the resources indicated by a thick line are the PDCCH.

The present signalling scheme has been defined above with reference to LTE, but it could be applied to other wired and wireless communication systems using OFDM or other frequency or time division multiplexing schemes that can use multiple numerologies.

Further embodiments of the present invention are provided in the following. It should be noted that the numbering used in the following section does not necessarily need to comply with the numbering used in the previous sections.
Embodiment 1. A communication terminal for communicating with a base device by frequency and/or time division multiplexing, the terminal being configured to transmit and/or receive signals to and/or from the base device using any of a plurality of numerology types, the communication terminal being configured to:
   communicate with the base device using a default one of the numerology types and thereby receive a configuration word from the base device;
   determine in dependence on the default one of the numerology types and the configuration word a secondary numerology type; and subsequently
   communicate with the base device using the secondary numerology type when the second numerology is activated.
Embodiment 2. A communication terminal in embodiment 1, wherein the terminal is configured to determine in dependence on the default one of the numerology types and the configuration word a location at which the secondary numerology is to be active.
Embodiment 3 A communication terminal according to embodiment 1 or 2, the communication terminal storing information indicative of a time at which to activate the second numerology, or being configured to receive information indicative of a time at which to activate the second numerology.
Embodiment 4. A communication terminal in any preceding embodiment, wherein the number of bits in the configuration word is less than the number of bits in the binary representation of the number of the plurality of numerology types.
Embodiment 5. A communication terminal in any of embodiments 1 to 3, wherein the terminal is configured to:
   determine a region of the frequency spectrum in which to operate; and
   in dependence on that determination select the default one of the numerology types.
Embodiment 6. A communication terminal in any preceding embodiment, wherein the terminal stores, for each of at least some of the numerology types, a mapping defining which of the plurality of numerology types are indicated by specific values of the configuration word, the terminal being configured to perform the step of determining a secondary numerology type by selecting as the secondary numerology type the numerology type indicated for the received configuration word by the mapping corresponding to the default numerology type.
Embodiment 7. A communication terminal in any of embodiments 1 to 5, wherein the terminal is configured to perform the step of determining a secondary numerology type by:
   determining in dependence on the received communication word a deviation from the default numerology type;
   selecting as the secondary numerology type the one of the plurality of numerology types that deviates from the default numerology type by the determined deviation.
Embodiment 8. A communication terminal in any preceding embodiment, wherein the communication terminal is configured to receive from the base device an indication of a time and/or frequency space resource associated with the configuration word; and in dependence on that indication use the secondary numerology type for transmission and/or reception of signals in that resource.
Embodiment 9. A communication terminal in any preceding embodiment, wherein the communication terminal is configured to:
   store a definition of one or more identifiers pertaining to the terminal;
   receive a resource identifier associated with the configuration word; and
   determine whether the received resource identifier matches the definition of one or more identifiers; and wherein the terminal is configured such that the step of communicating with the base device using the secondary numerology type is conditional on the received resource identifier matching the definition of one or more identifiers.
Embodiment 10. A communication terminal for communicating with a base device by frequency and/or time division multiplexing, the terminal being configured to transmit and/or receive signals to and/or from the base device using any of a plurality of numerology types, the communication terminal being configured to:
   store a definition of one or more identifiers pertaining to the terminal;
      communicate with the base device using a default one of the numerology types and thereby receive from the base device (i) a configuration word and (ii) an indication of a time and/or frequency space resource associated with the configuration word;
      determine in dependence on the configuration word a secondary numerology type; and subsequently
   communicate with the base device using the secondary numerology type in the resource indicated by the said indication.
Embodiment 11. A communication terminal in embodiment 8 or 10, wherein the indication of a resource comprises an indication of a set of subcarriers and a length of a group of symbols defining that resource.
Embodiment 12. A communication terminal in embodiment 10 or 11, wherein the indication of a resource indicates a time when the group of symbols will occur and/or a repetition schedule for the group of symbols.
Embodiment 13. A communication terminal for communicating with a base device by frequency and/or time division multiplexing, the terminal being configured to transmit and/or receive signals to and/or from the base device using any of a plurality of numerology types, the communication terminal being configured to:
   store a definition of one or more identifiers pertaining to the terminal;
   communicate with the base device using a default one of the numerology types and thereby receive from the base device (i) a configuration word and (ii) a resource identifier associated with the configuration word; determine in dependence on the configuration word a secondary numerology type;
   determine whether the received resource identifier matches the definition of one or more identifiers; and if the received resource identifier matches the definition of one or more identifiers, communicate with the base device using the secondary numerology type.
Embodiment 14. A communication terminal in embodiment 9 or 13, wherein the resource identifier is indicative of a single terminal associated with the base device.
Embodiment 15. A communication terminal in embodiment 9 or 13, wherein the resource identifier is indicative of multiple terminals associated with the base device.
Embodiment 16. A communication terminal in any of embodiments 9 or 13 to 15, wherein the resource identifier is an identifier allocated to the terminal by the base device.
Embodiment 17. A communication terminal in any preceding embodiment, wherein the communication terminal is configured to recover control channel information transmitted by the base device by means of one or both of the primary and secondary numerology types.
Embodiment 18. A communication terminal in any preceding embodiment, wherein the terminal is configured to, on connecting to a communication system, receive signalling identifying the said plurality of numerology types and store an indication of those numerology types.
Embodiment 19. A communication base device for communicating with a terminal by frequency and/or time division multiplexing, the base device being configured to transmit and/or receive signals to and/or from the terminal using any of a plurality of numerology types, the base device being configured to:
   communicate with the terminal device using a default one of the numerology types and thereby transmit a configuration word to the terminal, the configuration word indicating a secondary numerology type; and subsequently
   communicate with the terminal using the secondary numerology type when the secondary numerology type is activated.
Embodiment 20. A communication base device in embodiment 19, wherein the base device is configured to transmit a or the configuration word to the terminal indicating a location at which the secondary numerology is to be active.
Embodiment 21. A communication base device according to embodiment 19 or 20, wherein the base device is configured to send or to receive information indicative of a time at which to activate the second numerology.
Embodiment 22. A communication base device in any of embodiments 19 to 21, wherein the number of bits in the configuration word is less than the number of bits in the binary representation of the number of the plurality of numerology types.
Embodiment 23. A communication base device in any of embodiments 19 to 21, wherein the base device is configured to operate in a region of the frequency spectrum; and to select in dependence on that region the default one of the numerology types.
Embodiment 24. A communication base device in any of embodiments 19 to 23, wherein the base device stores, for each of at least some of the numerology types, a mapping defining which of the plurality of numerology types are indicated by specific values of the configuration word, the base device being configured to generate the configuration word for transmission by selecting a secondary numerology type and determining the configuration word indicated for the selected numerology type by the mapping corresponding to the default numerology type.
Embodiment 25. A communication base device in any of embodiments 19 to 24, wherein the base device is configured to generate the configuration word for transmission by:
   selecting a secondary numerology type;
   determining a deviation of the secondary numerology type from the default numerology type;
   determining the configuration word so as to represent the deviation of the selected secondary numerology type from the default numerology type.
Embodiment 26. A communication base device in any of embodiments 19 to 25, wherein the base device is configured to transmit to the terminal an indication of a time and/or frequency space resource associated with the configuration word.
Embodiment 27. A communication base device in embodiment 26, wherein the indication of a resource is an indication of a set of subcarriers and symbols defining that resource.
Embodiment 28. A communication base device in any of embodiments 19 to 27, wherein the communication base device is configured to:
   store a definition of one or more identifiers pertaining to terminals associated with it; and
   transmit in association with the configuration word a resource identifier matching the said terminal.
Embodiment 29. A communication base device in embodiment 28, wherein the resource identifier is indicative of a single terminal associated with the base device.
Embodiment 30. A communication base device in embodiment 28, wherein the resource identifier is indicative of multiple terminals associated with the base device.
Embodiment 31. A communication base device in any of embodiments 28 to 30, wherein the base device is configured to allocate the resource identifier to the terminal.
Embodiment 32. A communication base device in any of embodiments 28 to 31, wherein the resource identifier is a Radio Network Temporary Identifier.
Embodiment 33. A communication base device for communicating with a terminal by frequency and/or time division multiplexing, the base device being configured to transmit and/or receive signals to and/or from the terminal using any of a plurality of numerology types, the base device being configured to:
   communicate with the terminal using a default one of the numerology types and thereby transmit to the terminal (i) a configuration word indicating a secondary numerology type and (ii) an indication of a time and/or frequency space resource associated with the configuration word; and subsequently communicate with the terminal using the secondary numerology type in the resource indicated by the said indication.
Embodiment 34. A communication base device in embodiment 33, wherein the indication of a resource comprises an indication of a set of subcarriers and a length of a group of symbols defining that resource.
Embodiment 35. A communication base device in embodiment 34 wherein the group of symbols is a contiguous group of symbols.
Embodiment 36. A communication base device in any of embodiments 33 to 35, wherein the indication of a resource indicates a time when the group of symbols will occur.
Embodiment 37. A communication base device in any of embodiments 33 to 36, wherein the indication of a resource indicates a repetition schedule for the group of symbols.
Embodiment 38. A communication base device in any of embodiments 33 to 37, wherein the base device is configured to:
   at a first time transmit to the terminal the configuration word indicating the secondary numerology type; and
   at a second time subsequent to the first time, transmit to the terminal the indication of a time and/or frequency space resource associated with the configuration word.
Embodiment 39. A communication base device for communicating with a terminal by frequency and/or time division multiplexing, the base device being configured to transmit and/or receive signals to and/or from the terminal using any of a plurality of numerology types, the base device being configured to: allocate an identity to the terminal;
   communicate with the base device using a default one of the numerology types and thereby transmit to the terminal (i) a configuration word indicating a secondary numerology type and (ii) a resource identifier associated with the configuration word, the resource identifier matching the identity allocated to the terminal; and subsequently
   communicate with the base device using the secondary numerology type.
Embodiment 40. A communication base device in embodiment 39, wherein the resource identifier is indicative of a single terminal associated with the base device.
Embodiment 41. A communication base device in embodiment 40, wherein the resource identifier is indicative of multiple terminals associated with the base device.
Embodiment 42. A communication base device in any of embodiments 39 to 41, wherein the base device is configured to allocate the resource identifier to the terminal.
Embodiment 43. A communication base device in any of embodiments 39 to 42, wherein the resource identifier is a Radio Network Temporary Identifier.
Embodiment 44. A communication base device in any of embodiments 19 to 43, wherein the secondary numerology type differs from the default numerology in subcarrier spacing and/or cyclic prefix length.
Embodiment 45. A communication base device in any of embodiments 19 to 44, wherein the communication base device is configured to transmit control channel information to the terminal by means of the one or both of the primary and secondary numerology types.
Embodiment 46. A communication base device in any of embodiments 19 to 45, wherein the base device is configured to, on a terminal connecting to it, transmit signalling identifying the said plurality of numerology types.
Embodiment 47. A communication system comprising a terminal in any of embodiments 1 to 18 and a base device in any of embodiments 19 to 46.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. An indication method, wherein the method comprises:
receiving an indicator from a network device, by communicating with the network device based on a primary numerology type, wherein the indicator indicates a secondary numerology type; wherein a numerology type includes at least one of the following: a subcarrier spacing, a cyclic prefix length; and a primary numerology comprises a default numerology or an initial numerology; and
determining the secondary numerology type based on the indicator, wherein the secondary numerology type is used by a terminal to communicate with a network device.

2. The method according to claim 1, wherein the method further comprises:
determining a region of the spectrum to be operated in;
selecting the primary numerology type according to the region.

3. The method according to claim 1 or 2, wherein the determining the secondary numerology type according to the indicator comprises:
determining the secondary numerology type according to the indicator and a stored mapping relationship between the indicator and the secondary numerology type.

4. The method according to any one of claims 1 to 3, wherein the method further comprises:
receiving an indication from the network device of at least one of a time resource and a frequency resource associated with the indicator, by communicating with the network device according to the primary numerology type; and
transmitting or receiving a signal on the resource, according to the indication, by using the secondary numerology type; or transmitting or receiving a signal on the resource, according to the indication.

5. The method according to any one of claims 1 to 4, wherein the method further comprises:
receiving a resource identifier associated with the indicator; and
determining whether the resource identifier matches a stored definition of one or more resource identifiers associated with the terminal device; wherein the resource identifier indicates a single terminal device associated with the network device, or indicates a plurality of terminal devices associated with the network device.

6. The method according to any one of claims 1 to 5, wherein the method further comprises:
recovering the control channel information from the network device by using one or both of the primary numerology type and the secondary numerology type.

7. An indication method, wherein the method comprises:
generating indication information, wherein the indication information comprises an indicator, and the indicator indicates a secondary numerology type; and
transmitting the indication information to a terminal device, by communicating with the terminal device based on a primary numerology type; wherein a numerology type includes at least one of the following: a subcarrier spacing, a cyclic prefix length; and a primary numerology comprises a default numerology or an initial numerology.

8. The method according to claim 7, wherein the method further comprises:
operating in a region of the spectrum; and
selecting the primary numerology type according to the region.

9. The method according to claim 7 or 8, wherein the generating indication information comprises:
generating the indication information according to the selected secondary numerology type and a stored mapping relationship between the secondary numerology type and the indicator.

10. The method according to any one of claims 7 to 9, wherein the method further comprises:
transmitting to the terminal device, an indication of at least one of a time resource and a frequency resource associated with the indicator, by communicating with the terminal device based on the primary numerology type.

11. The method according to any one of claims 7 to 10, wherein the method further comprises:
transmitting a resource identifier associated with the indicator according to a stored definition of one or more resource identifiers associated with the terminal device; wherein the resource identifier indicates a single terminal associated with a network device, or indicate a plurality of terminals associated with the network device.

12. The method according to any one of claims 7 to 11, wherein the method further comprises:
transmitting the control channel information to the terminal device by using one or both of the primary numerology type and the secondary numerology type.

13. An apparatus, wherein the apparatus is configured to implementing the method according any one of claims 1-6.

14. The apparatus according claim 13, wherein the apparatus is a terminal device or a chip.

15. An apparatus, wherein the apparatus is configured to implementing the method according any one of claims 7-12.

16. The apparatus according claim 15, wherein the apparatus is a network device or a chip.

17. A computer readable storage medium, comprising a computer program, when being executed by a computer, the method according to any one of claims 1-12 is implemented.

18. A computer program product, wherein when being executed by a computer, the method according to any one of claims 1-12 is implemented.
